# EUROPÄISCHE PATENTSCHRIFT

(11) **EP 0 754 136 B1**
(45) Veröffentlichungstag und Bekanntmachung des Hinweises auf die Patenterteilung: **10.03.1999**
(21) Anmeldenummer: 95918563.8
(22) Anmeldetag: 18.04.1995
(51) Int. Cl.: B60T 8/40, B60T 8/42, B60T 8/26, B60T 8/24, B60T 13/68, B60T 11/20

(54) **ELEKTRONISCH REGELBARES BREMSBETÄTIGUNGSSYSTEM**
ELECTRONICALLY ADJUSTABLE BRAKE OPERATING SYSTEM
SYSTEME D'ACTIONNEMENT DES FREINS A REGULATION ELECTRONIQUE

(30) Priorität: 19.04.1994 DE 4413579
(43) Veröffentlichungstag der Anmeldung: 22.01.1997
(73) Patentinhaber: Continental Teves AG & Co. oHG, 60488 Frankfurt (DE)
(72) Erfinder: FEIGEL, Hans-Jörg, D-61191 Rosbach (DE); KLEIN, Andreas, D-61350 Bad Homburg (DE); NEUMANN, Ulrich, D-64380 Ro dorf (DE); SCHIEL, Lothar, D-65719 Hofheim (DE)
(86) Internationale Anmeldenummer: EP9501445
(87) Internationale Veröffentlichungsnummer: WO9528307

(56) Entgegenhaltungen:
- EP-A- 0 157 944
- EP-A- 0 292 648
- EP-A- 0 398 531
- DE-A- 2 208 936
- DE-A- 3 424 912
- DE-A- 4 029 793
- DE-A- 4 229 041
- DE-C- 4 003 579
- DE-C- 4 102 497
- GB-A- 2 169 975
- GB-A- 2 173 269
- JP-A- 5 238 373
- US-A- 4 756 391
- US-A- 4 812 777

## Beschreibung

Die Erfindung betrifft ein elektronisch regelbares, blockiergeschütztes Bremsbetätigungssystem in einem Kraftfahrzeug, mit einem mittels eines Betätigungspedals betätigbaren Tandemhauptzylinder, mit durch eine elektronische Steuereinheit ansteuerbaren Bremsdruckgebern, an die Radbremsen des Fahrzeuges angeschlossen sind und die über durch die elektronische Steuereinheit ansteuerbare Elektromagnetventile absperrbare hydraulische Verbindungen mit dem Tandemhauptzylinder verbindbar sind, mit mindestens einer Sensoreinrichtung zur Erkennung des Fahrerverzögerungswunsches sowie mit mindestens einer mit dem Tandemhauptzylinder zusammenwirkenden Simulatorkammer, die von einem mittels einer Pedalwegsimulatorfeder vorgespannten Simulatorkolben begrenzt ist und deren Druck-Volumenaufnahme-Charakteristik unabhängig von der der Radbremsen ist.

Ein derartiges Bremsbetätigungssystem ist z.B. aus der DE 41 02 497 C1 bekannt. Bei dem vorbekannten Bremsbetätigungssystem sind die zur Pedalwegsimulation ausnutzbaren Pufferspeicher, die getrennt vom Hauptbremszylinder angeordnet sind, relativ weit vom Bremspedal entfernt, so daß in einem Regelfall kein optimales Pedalgefühl erreicht werden kann. Als weniger vorteilhaft anzusehen sind außerdem der mit dem Einbau der Pufferspeicher verbundene Bauraumbedarf sowie die relativ schlechte Entlüftbarkeit der Pufferspeicher.

Weiterhin ist aus der DE 42 29 041 A1 ein elektronisch regelbares, ausfallsicheres Bremsbetätigungssystem bekannt, bei dem sowohl der Hauptbremszylinder als auch die elektrisch ansteuerbaren, mit eigenem Druckmittelvorratsbehälter ausgestatteten Bremsdruckgeber über ein elektromagnetisch betätigbares 3/2-Wegeventil mit den Radbremsen verbindbar sind. In einer ersten Schaltstellung des 3/2-Wegeventils besteht eine hydraulische Verbindung zwischen dem Hauptbremszylinder bzw. dem Druckgeber und der Radbremse, während die Verbindung zwischen dem Druckgeber bzw. dem Hauptbremszylinder und der Radbremse abgesperrt ist. In einer zweiten Schaltstellung stellt das 3/2-Wegeventil eine hydraulische Verbindung zwischen dem Druckgeber bzw. dem Hauptbremszylinder und der Radbremse her, während die Verbindung zwischen dem Hauptbremszylinder bzw. dem Druckgeber und der Radbremse abgesperrt wird. Durch die genannten Maßnahmen wird bei intaktem System der Fahrer von der Radbremse getrennt und spürt ein hartes Pedal. Dadurch, daß die Bremsdruckgeber mit eigenen Druckmittelvorratsbehältern ausgestattet sind, müssen sie bei einem Stromausfall von den Radbremsen getrennt werden, so daß aufwendige Ventile verwendet werden müssen.

Es ist daher Aufgabe der vorliegenden Erfindung ein elektronisch regelbares, blockiergeschütztes Bremsbetätigungssystem der eingangs genannten Gattung dahingehend zu verbessern, daß insbesondere die bei einer ABS-Regelung genannten Nachteile weitgehendst vermieden werden.

Gleichzeitig soll eine Verbesserung des Pedalgefühls bei gleichzeitiger Senkung des Gesamtaufwandes erreicht werden.

Diese Aufgabe wird erfindungsgemäß dadurch gelöst, daß die Simulatorkammer im Tandemnauptzylinder als Bestandteil des Sekundärraums ausgebildet ist, wobei der Simulatorkolben im Sekundärkolben geführt ist und eine hydraulische Kammer im Sekundärkolben begrenzt, die mit einem mit dem Tandemhauptzylinder zusammenwirkenden drucklosen Druckmittelvorratsbehälter in Verbindung steht. Durch diese Maßnahmen wird eine besonders kompaktbauende Ausführung des erfindungsgemäßen Bremsbetätigungssystems erreicht.

Bei einer vorteilhaften Weiterbildung des Erfindungsgegenstandes ist der Simulatorkolben bei Betätigung des Tandemhauptzylinders entgegen der Betätigungsrichtung bewegbar und wirkt mit einem an bzw. in dem Sekundärkolben ausgebildeten Anschlag zusammen. Dabei ist es besonders vorteilhaft, wenn sich die Pedalwegsimulatorfeder am Hauptbremszylindergehäuse abstützt und eine progressive Kraft-Weg-Kennlinie aufweist.

Durch die Abstützung am Tandemhauptzylinder-Gehäuse ist die Voraussetzung geschaffen, daß ein großer Teil der in der Pedalwegsimulatorfeder gespeicherten Hubarbeit wieder für den Bremsdruckaufbau genutzt werden kann, wenn der Simulatorkolben an den Hauptbremszylinderkolben anschlägt und die Pedalwegsimulatorfeder entspannt wird. Dieser Arbeitsbereich ist ausschließlich für die hydraulische Funktion (Ausfall der Elektrik) vorgesehen, um für große Fahrzeuge die gesetzlichen Bestimmungen zu erfüllen.

Eine kontrollierte Ansteuerung, insbesondere bezüglich der Schwellwerte bzw. Gradienten, der Ventileinrichtungen, die erst nach einer Fehlerüberprüfung freigegeben wird, wird bei einer weiteren vorteilhaften Ausgestaltung des Erfindungsgegenstandes dadurch erreicht, daß die Ventileinrichtungen mittelbar durch die der elektronischen Steuereinheit zugeführten Ausgangssignale der Sensoreinrichtung ansteuerbar sind.

Eine ohne Reibung bzw. Schließwege direkt ermittelbare Fahrerverzögerungswunscherkennung wird bei einer vorteilhaften Weiterbildung der Erfindung dadurch ermöglicht, daß die Sensoreinrichtung durch einen die auf das Bremsbetätigungspedal einwirkende Betätigungskraft erfassenden Kraftsensor gebildet ist.

Eine vorteilhafte, kostengünstige herstellbare, betriebssichere Ausführung des erfindungsgemäßen Bremsbetätigungssystems, bei dem die Sensoreinrichtung durch mindestens einen an den Hauptbremszylinder angeschlossenen Drucksensor gebildet ist, besteht darin, daß der Drucksensor als Bestandteil der elektronischen Steuereinheit ausgebildet ist. Da außerhalb der elektronischen Steuereinheit keine Kabel- und Steckerverbindungen vorgesehen sind, wird dadurch eine Montagevereinfachung erreicht.

Eine reibungsarme Umwandlung einer Dreh- in eine Linearbewegung erfolgt insbesondere bei einer vorteilhaften Weiterbildung der Erfindung, bei der die Bremsdruckgeber durch Hydraulikzylinder gebildet sind, deren Kolben mittels elektrisch ansteuerbarer Gleichstrommotoren betätigbar sind, dadurch, daß die Betätigung mittels eines zwischen Kolben und Gleichstrommotor geschalteten Kugelgewindetriebs erfolgt. Dabei ist es sinnvoll, wenn die Spindel des Kugelgewindetriebs und die Welle des Gleichstrommotors ein Bauteil bilden bzw. wenn die Welle des Gleichstrommotors hohl ausgebildet ist und die Spindel des Kugelgewindetriebs aufnimmt. Durch diese Maßnahmen wird eine einfache Montage der Bremsdruckgeber bzw. eine einfache Ausbildung der Spindel erreicht. Zudem weisen die Bremsdruckgeber eine kurze Bauform auf.

Um die thermische und elektrische bzw. energetische Beanspruchung des den Bremsdruckgeber betätigenden Gleichstrommotors möglichst gering zu halten, sieht eine weitere vorteilhafte Ausgestaltung des Erfindungsgegenstandes vor, daß Mittel vorgesehen sind, die eine Reduzierung des dem Gleichstrommotor zuzuführenden Stromes bei gleichzeitigem Verhindern eines Abbaus des in der Radbremse eingesteuerten Druckes ermöglichen. Dadurch bleibt die gewünschte Bremswirkung erhalten, obwohl der Gleichstrommotor abkühlt. Die erwähnten Mittel können dabei vorzugsweise entweder durch zwischen der Radbremse und dem Bremsdruckgeber geschaltete Ventile oder durch eine Reibungsbremse gebildet sein, die mit dem Kugelgewindetrieb des Bremsdruckgebers zusammenwirkt. Bei der zweitgenannten Ausführung ist dabei nur ein kleines Bremsmoment notwendig.

Dabei ist es besonders vorteilhaft, wenn die Reibungsbremse elektrisch ansteuerbar ist. Gegenüber permanentwirkenden Reibbremsen entstehen im Normalbetrieb keine Verluste.

Bei einer anderen vorteilhaften Weiterbildung des Erfindungsgegenstandes ist der Gleichstrommotor reversierbar ausgebildet. Durch diese Maßnahme werden hohe Druckabbaugeschwindigkeiten auch bei niedrigen Bremsdrücken erreicht. Außerdem zeichnet sich eine derartige Ausführung durch geringe Anfälligkeit gegen Reibeffekte bei einem Druckabbau sowie durch eine reduzierte axiale Baulänge aus.

Bei einer vorteilhaften, hochdynamisch arbeitenden Ausführung, bei der keine Energiebedarfsspitzen-Problematik auftritt und bei der die Bremsdruckgeber durch Hydraulikzylinder gebildet sind, deren Kolben mittels ventilgesteuerter, pneumatisch bzw. hydraulisch ansteuerbarer Linearantriebe betätigbar sind, wird eine gute Regelbarkeit bei Reduzierung des erforderlichen Sensoraufwandes dadurch erreicht, daß die der Ansteuerung dienenden Ventile als Druckregelventile ausgebildet sind. Die insbesondere hydraulische Ansteuerung der Linearantriebe erfolgt dabei bei einer vorteilhaften Weiterbildung mittels einer einzigen Druckquelle, an die weitere Hydraulikverbraucher anschließbar sind. Alternativ können die Linearantriebe durch pneumatischen Hochdruck ansteuerbar sein. Eine derartige Ausführung nutzt die gute Speicherbarkeit der Luft und zeichnet sich vor allem durch einen geringen Bauraumbedarf aus.

Eine Verbesserung der Regelbarkeit wird bei einer vorteilhaften Weiterbildung der Erfindung dadurch erreicht, daß Mittel zum Erfassen der Position der Druckgeberkolben bzw. der Winkelposition der Rotoren der Gleichstrommotoren vorgesehen sind.

Eine besonders gute Regelbarkeit, insbesondere im unteren Druckbereich wird bei einer weiteren vorteilhaften Ausgestaltung des Erfindungsgegenstandes dadurch erreicht, daß die der Ansteuerung dienenden Ventile in einem Lageregelkreis integriert sind, der die Ausgangssignale der vorhin erwähnten Mittel zum Erfassen der Position der Druckgeberkolben bzw. der Winkelposition der Rotoren der Gleichstrommotoren verarbeitet.

Eine weitere Verbesserung der Regelbarkeit wird bei einer vorteilhaften Weiterbildung dadurch erreicht, daß Mittel zum Sensieren des von den Druckgebern aufgebrachten Druckes vorgesehen sind, wobei die der Ansteuerung dienenden Ventile in einem Druckregelkreis integriert sind, der die Ausgangssignale der Mittel zum Sensieren des von den Druckgebern aufgebrachten Druckes verarbeitet.

Die Erfindung wird in der nachfolgenden Beschreibung von vier Ausführungsbeispielen unter Bezugnahme auf die beiliegende Zeichnung näher erläutert. In der Zeichnung zeigt:
- Fig. 1: ein Schaltbild einer ersten Ausführung eines Bremsbetätigungssystems mit einem konventionellen Hauptbremszylinder und konventionellen Simulatorkammern,
- Fig. 2: einen die Bremsdruckgeber nach Fig. 1 antreibenden Gleichstrommotor im Axialschnitt,
- Fig. 3: ein Schaltbild einer zweiten Ausführung eines Bremsbetätigungssystems mit einem konventionellen Hauptbremszylinder und konventionellen Simulatorkammern,
- Fig. 4: ein Schaltbild einer dritten Ausführung eines Bremsbetätigungssystems mit einem konventionellen Hauptbremszylinder und konventionellen Simulatorkammern,
- Fig. 5: ein Schaltbild einer vierten Ausführung eines Bremsbetätigungssystems mit einem konventionellen Hauptbremszylinder und konventionellen Simulatorkammern, und
- Fig. 6: eine Ausführung eines bei dem erfindungsgemäßen Bremsbetätigungssystem zu verwendenden Hauptbremszylinders.

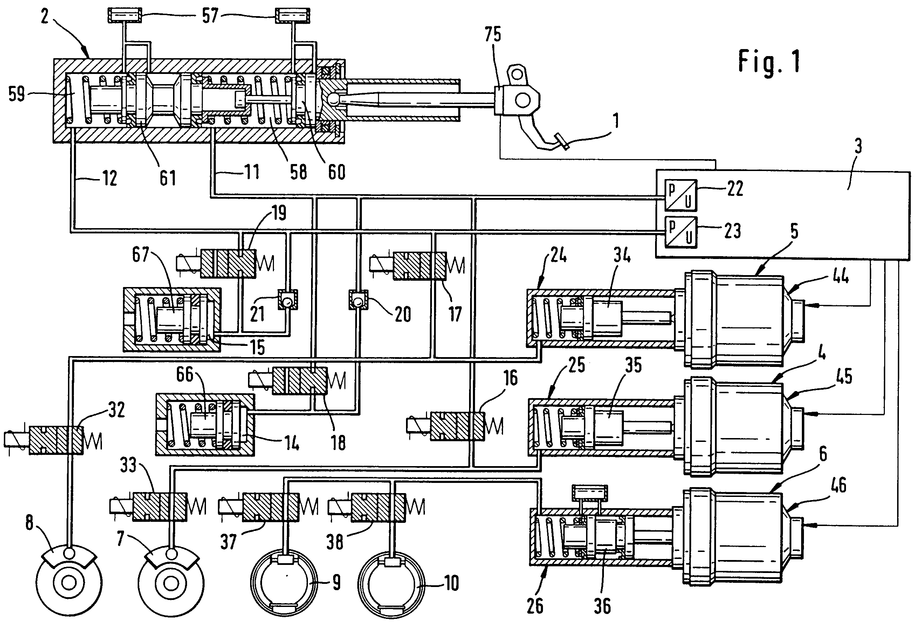

Das in Fig. 1 dargestellte, elektronisch regelbare Bremsbetätigungssystem ist für ein Fahrzeug mit Vorderradantrieb vorgesehen. Es besteht aus einem mittels eines Betätigungspedals 1 betätigbaren, zweikreisigen Hauptbremszylinder bzw. Tandemhauptzylinder 2, der durch zwei Kolben 60,61 begrenzte, voneinander getrennte Druckräume 58,59 aufweist, die mit einem drucklosen Druckmittelvorratsbehälter 57 in Verbindung stehen. Der erste Druckraum (Primärdruckraum) 58 steht mittels einer absperrbaren ersten hydraulischen Leitung 11 in Verbindung mit einem elektrisch ansteuerbaren Bremsdruckgeber, an den eine der Vorderachse zugeordnete hydraulische Radbremse 7 angeschlossen ist. Das Absperren der Leitung 11 erfolgt mittels eines ersten Elektromagnetventils 16, während in den Leitungsabschnitt zwischen dem Bremsdruckgeber 4 und der Radbremse 7 ein ebenso elektromagnetisch betätigbares Trennventil 33 eingefügt ist. Außerdem ist an den ersten Druckraum 58 über eine Parallelschaltung eines elektromagnetisch betätigbaren 2/2-Wegeventils 18 und eines zum Hauptbremszylinder 2 hin öffnenden Rückschlagventils 20 eine durch einen federnd vorgespannten Kolben 66 begrenzte erste Simulatorkammer 14 angeschlossen. Der zweite Druckraum (Sekundärdruckraum) 59 steht über eine mittels eines zweiten Elektromagnetventils 17 absperrbare zweite hydrauliche Leitung 12 mit einem zweiten elektrisch ansteuerbaren Bremsdruckgeber 5, an den die andere, der Vorderachse zugeordnete hydraulische Radbremse 8 angeschlossen ist, der ein elektromagnetisch betätigbares Trennventil 32 vorgeschaltet ist. Außerdem ist an den zweiten Druckraum 59 über eine Parallelschaltung eines zweiten elektromagnetisch betätigbaren 2/2-Wegeventils 19 sowie eines zum Hauptbremszylinder 2 hin öffnenden, zweiten Rückschlagventils 21 eine durch einen federnd vorgespannten zweiten Kolben 67 begrenzte zweite Simulatorkammer 15 angeschlossen. An einen dritten Bremsdruckgeber 6 sind über weitere Trennventile 37,38 beide ggf. der Hinterachse zugeordneten hydraulischen Radbremsen 9,10 angeschlossen. Alle drei Bremsdruckgeber 4,5,6 sind von ihrem Aufbau her gleich und bestehen aus je einem Hydraulikzylinder 24,25,26, in dem je ein Kolben 34,35,36 verschiebbar geführt ist, der durch je einen vorzugsweise reversierbaren Gleichstrommotor 44,45,46 antreibbar ist. Der gemeinsamen Ansteuerung der Gleichstrommotoren 44,45,46 sowie der Elektromagnetventile dient eine elektronische Steuereinheit 3, der als Eingangssignale die Ausgangssignale eines mit den Betätigungspedal 1 zusammenwirkenden Bremslichtschalters 75, sowie zweier Drucksensoren 22,23 zugeführt werden, die an die Druckräume 58,59 des Tandemhauptzylinders 2 angeschlossen sind und die eine Fahrerverzögerungswunscherkennung ermöglichen. Dabei ist es besonders vorteilhaft, wenn die Drucksensoren 22,23 als Bestandteile der elektronischen Steuereinheit 3 ausgebildet sind. Zur Fahrerverzögerungswunscherkennung können jedoch auch andere Mittel, beispielsweise ein die Betätigungskraft am Betätigungspedal 1 sensierender Kraftsensor verwendet werden.

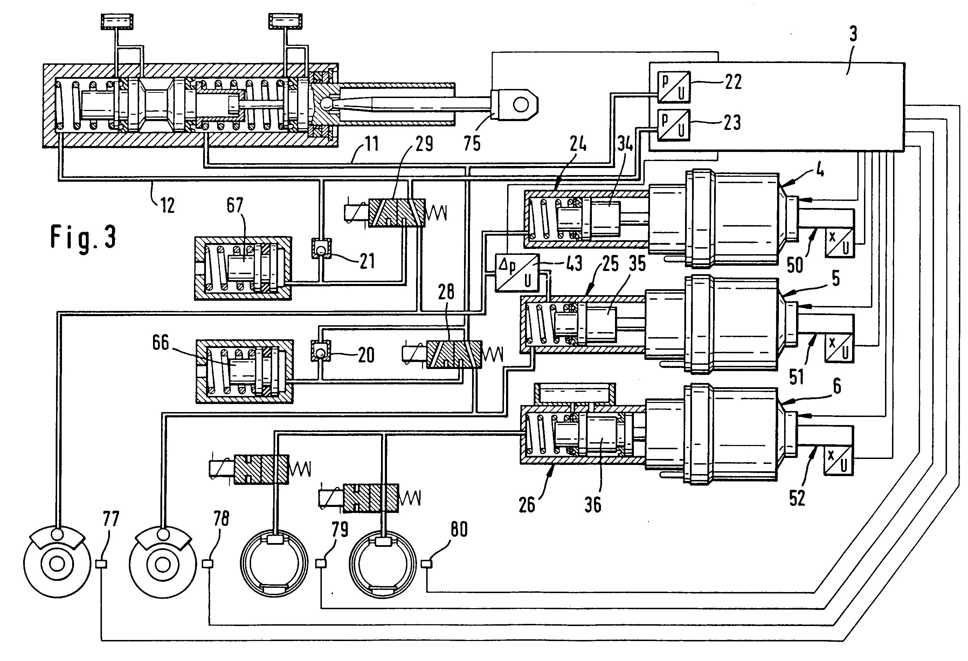

Außerdem sind den einzelnen, nicht gezeigten Rädern in Fig. 1 nicht dargestellte Radsensoren 77,78,79,80 (Fig. 3) zugeordnet, deren der Fahrgeschwindigkeit entsprechende Ausgangssignale als weitere Eingangsgrößen der elektronischen Steuereinheit 3 zugeführt werden.

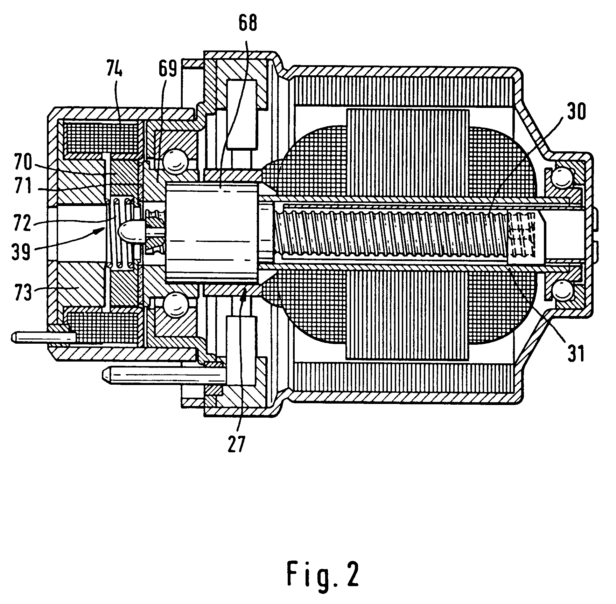

Wie insbesondere der Fig. 2 zu entnehmen ist, erfolgt die Betätigung des Kolbens 34,35,36 des Bremsdruckgebers 4,5,6 mittels eines Kugelgewinde- bzw. Spindel-Mutter-Triebs 27, dessen Spindel 30 verdrehgesichert in einer vorzugsweisen hohlen Welle 31 des Gleichstrommotors 44,45,46 angeordnet ist. Die in kraftübertragender Verbindung mit dem Kolben 34,35,36 stehende Spindelmutter 68 trägt eine Druckplatte 69, die mit einem verdrehgesichert angeordneten, mit einem Reibbelag 71 versehenen, mittels einer Spannfeder 72 in Richtung auf die Druckplatte 69 zu vorgespannten Magnetanker 70 im Eingriff steht. Der Magnetanker 70 wirkt mit einem Magnetkern 73 sowie einer Spule 74 so zusammen, daß bei einer Aktivierung des so entstehenden Elektromagneten der Magnetanker 70 gegen die Wirkung der Spannfeder 72 vom Magnetkern 73 angezogen wird, so daß er außer Eingriff mit der Druckplatte 69 gebracht wird. Die erwähnten Teile 69 bis 74 bilden eine Reibungsbremse 39, die es ermöglicht, den dem Gleichstrommotor 44,45,46 zuzuführenden Strom bei gleichzeitigem Verhindern eines Abbaues des in der Radbremse 7,8,9,10 herrschenden hydraulischen Druckes zu reduzieren. Zum gleichen Zweck können auch die zwischen den Bremsdruckgebern 4,5,6 und den einzelnen Radbremsen 7 bis 10 geschalteten Ventile 32,33,37,38 verwendet werden. Durch die Verwendung der den Radbremsen 9,10 zugeordneten Ventile 37,38 wird außerdem eine Multiplex-Druckregelung an der Hinterachse ermöglicht.

Bei der in Fig. 3 gezeigten zweiten Ausführung sind in den hydraulischen Leitungen 11,12 elektromagnetisch betätigbare 3/2-Wegeventile 28,29 eingefügt, die funktionsmäßig die bei der in Fig. 1 dargestellten Ausführung verwendeten Ventile 16,18 bzw. 17,19 ersetzen und vorzugsweise als Dopppelsitzventile ausgeführt werden können. An die nicht näher bezeichneten Druckräume der Hydraulikzylinder 24,25 ist ein Differenzdruck-Spannungswandler 43 angeschlossen, dessen Ausgangssignale als weitere Eingangsgröße der elektronischen Steuereinheit 3 zugeführt werden. Außerdem sind bei der gezeigten zweiten Ausführung Mittel vorgesehen, die ein indirektes Erfassen der Position der Bremsdruckgeberkolben 34,35,36 ermöglichen und die im dargestellten Beispiel durch Wegsensoren 50,51,52 gebildet sind, die die translatorische Bewegung der Spindel 30 (s.Fig.2) sensieren. Es ist allerdings auch denkbar, zum Zweck der Erfassung der Kolbenposition auch Mittel vorzusehen, die die Winkelposition der Rotoren der Gleichstrommotoren erfassen.

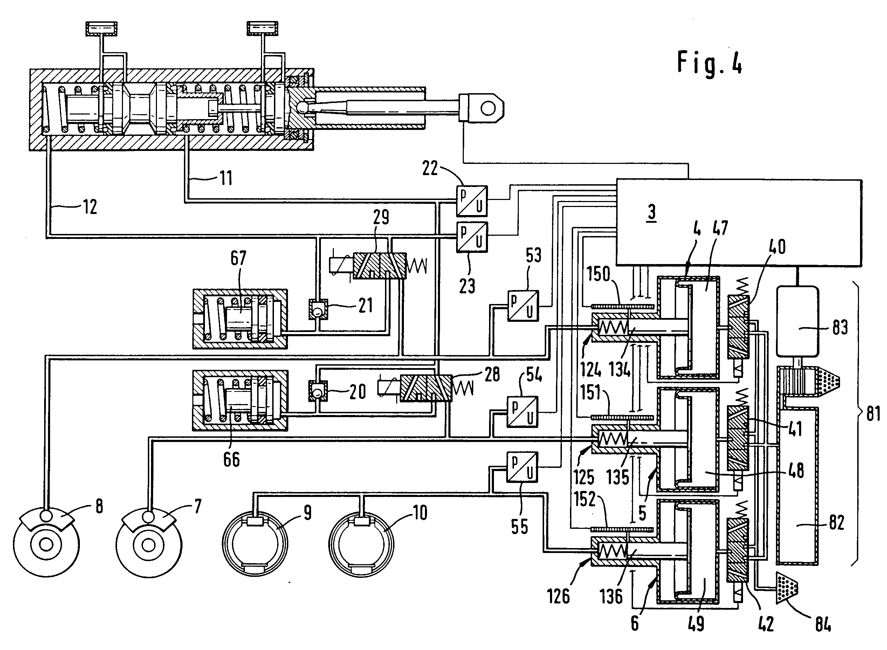

Bei der in Fig. 4 dargestellten, dritten Ausführung des Bremsbetätigungssystems sind die Bremsdruckgeber 4,5,6 als Hydraulikzylinder 124,125,126 ausgebildet, deren Kolben 134,135,136 mittels ventilgesteuerter pneumatisch ansteuerbarer Linearantriebe 47,48,49 betätigbar sind. Die Linearantriebe 47,48,49 sind über elektromagnetisch ansteuerbare 3/2-Wegeventile 40,41,42 an eine pneumatische Hochdruckquelle 81 anschließbar, die durch einen Hochdruckspeicher 82 sowie ein den Hochdruckspeicher 82 aufladendes Motor-Pumpen-Aggregat 83 gebildet ist. Die 3/2-Wegeventile 40,41,42 sind dabei vorzugsweise als Druckregelventile ausgebildet, die in ihrer dritten Schaltstellung die Linearantriebe 47,48,49 von der Hochdruckquelle 81 trennen und deren Verbindung mit der Atmosphäre (s. Luftfilter 84) herstellen.

Wie der Fig. 4 weiter zu entnehmen ist, sind an den zu den Radbremsen 7 bis 10 führenden Leitungsbschnitten Drucksensoren 53,54,55 angeschlossen, die die von den Bremsdruckgebern 4,5,6, aufgebrachten Drücke sensieren. Gleichzeitig wird die Position der Bremsdruckgeberkolben 134,135,136 mittels Weg-Spannungs-Wandler 150,151,152 direkt erfaßt, deren Ausgangssignale der elektronischen Steuereinheit 3 zugeführt werden, die Steuersignale für die Druckregelventile 40,41,42 erzeugt, so daß diese in einem Druck- und Lageregelkreis integriert sind. Es ist allerdings auch denkbar, die pneumatischen Druckregeleventile 40,41,42 derart auszubilden, daß deren elektromagnetischer Betätigungskraft der im Linearantrieb 47,48,49 eingesteuerte pneumatische Druck entgegenwirkt.

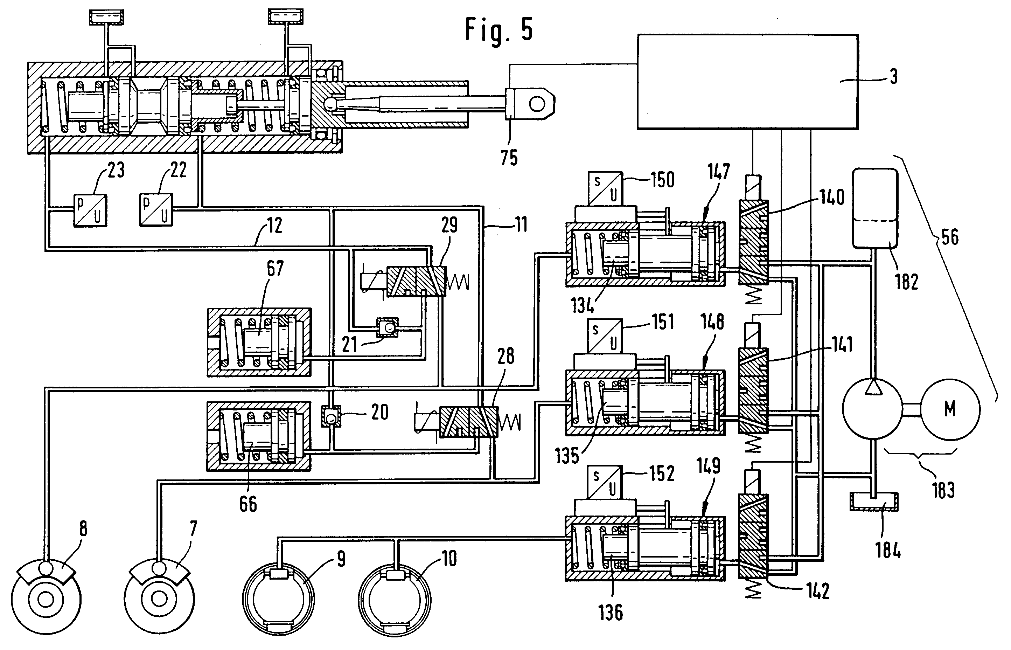

In Fig. 5 ist schließlich eine vierte Ausführungsform des Bremsbetätigungssystems dargestellt, bei der zur Betätigung der Druckgeberkolben 134,135,136 ventilgesteuerte, hydraulisch ansteuerbare Linearantriebe 147,148,149 eingesetzt werden. Die Ansteuerung erfolgt über hydraulische 3/3-Wege-Druckregelventile 140,141,142 mittels einer hydraulischen Druckquelle 56, an die auch weitere, im Fahrzeug vorhandene hydraulische Verbraucher anschließbar sind. Die hydraulische Druckquelle 56 besteht aus einem hydraulischen Motor-Pumpen-Aggregat 183, einem an die Saugseite der Pumpe angeschlossenen drucklosen Druckmittelvorratsbehälter 184 sowie einem an die Druckseite der Pumpe angeschlossenen hydraulischen Druckspeicher 182. In der ersten stromlosen Schaltstellung der Regelventile 140,141,142 besteht eine Verbindung zwischen den hydraulischen Linearantrieben 147,148,149 und dem Druckmittelvorratsbehälter 184, während die Verbindung zwischen den hydraulischen Linearantrieben 147,148,149 und der Druckseite der Pumpe bzw. dem Druckspeicher 182 gesperrt ist. In der zweiten Schaltstellung sind die Linearantriebe 147,148,149 sowohl vom Druckmittelvorratsbehälter 184 als auch von der Pumpe bzw. dem Druckspeicher 182 getrennt, so daß eine Druckhaltephase realisiert wird. In der dritten Schaltung wird eine Verbindung der Linearantriebe mit der Druckseite der Pumpe bzw. dem Druckspeicher 182 bei deren gleichzeitiger Trennung vom Druckmittelsvorratsbehälter 184 hergestellt, so daß ein Druckaufbau in den Radbremsen 7 bis 10 stattfindet. Die Position der Bremsdruckgeberkolben 134,135,136 wird wie bei der dritten Ausführung durch die Weg-Spannungs-Wandler 150,151,152 erfaßt.

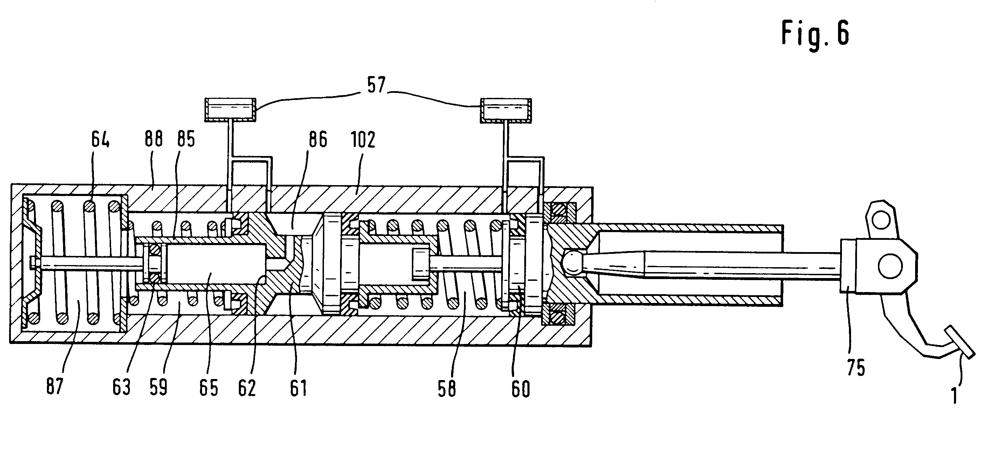

Bei der in Fig. 6 dargestellten erfindungsgemäßen Ausführung des Tandemhauptzylinders 102 bildet die vorhin erwähnte Simulatorkammer, hier mit dem Bezugszeichen 87 versehen, ein Bestandteil des zweiten (Sekundär-) Druckraumes 59. Die Simulatorkammer 87 wird dabei durch einen hydraulischen Simulatorkolben 63 begrenzt, der in einer axialen Verlängerung 85 des Sekundärkolbens 61 geführt wird und mit einem innerhalb des Sekundärkolbens 61 ausgebildeten Anschlag 62 in Eingriff bringbar ist. Der entgegen der Betätigungsrichtung durch eine sich am Gehäuse 88 des Tandemhauptzylinders 102 axial abstützende Pedalwegsimulatorfeder 64 vorgespannte Simulatorkolben 63 begrenzt im Sekundärkolben 61 eine Kammer 65, die über nicht näher bezeichnete Kanäle mit einem Ringraum 86 in Verbindung steht, der als Nachlaufraum für den Sekundärdruckraum 59 dient und somit mit dem dem Tandemhauptzylinder 102 zugeordneten Druckmittelvorratsbehälter 57 verbunden ist. Bei der Betätigung des Tandemhauptzylinders 102 wirkt auf den Simulatorkolben 63 ein hydraulischer Differenzdruck, der seine Bewegung entgegen der Betätigungsrichtung und damit ein Zusammendrücken der Pedalwegsimulatorfeder 64 zur Folge hat. Die Bewegung des Simulatorkolbens 63 wird durch den Anschlag 62 im Sekundärkolben 61 beendet.

Das insbesondere in Fig. 1 der Zeichnung dargestellte Bremsbetätigungssystem funktioniert wie folgt:

Wird ein Bremsvorgang durch Niederdrücken des Bremsbetätigungspedals 1 eingeleitet, so wird der Betätigungszustand vom Bremslichtschalter 75 erkannt und der elektronischen Steuereinheit 3 mitgeteilt, deren Steuersignale ein Umschalten der Ventile 16,17,18,19, und dadurch eine Trennung der Hauptzylinderdruckräume 58,59 von den Bremsdruckgebern 4,5 sowie deren Verbindung mit den Simulatorkammern 14,15 bewirken. Durch die Drucksensoren 22 und 23 erfolgt eine zweite Meldung des Fahrerverzögerungswunsches an die elektronische Steuereinheit 3, die mit der darin installierten Bremskraftverteilung die gewünschten Bremsmomente an den Fahrzeugachsen errechnet. Die den errechneten Bremsmomenten entsprechenden Steuersignale werden den Gleichstrommotoren 44,45,46 der Bremsdruckgeber 4,5,6 zugeführt, die ein Verschieben der Bremsdruckgeberkolben 34,35,36 in Betätigungsrichtung und somit eine Druckerhöhung in den Radbremsen 7 bis 10 einleiten. Das für den Fahrer gewöhnliche, bei einem Bremsvorgang spürbare Pedalgefühl wird durch die nun offene Verbindung zwischen dem Hauptbremszylinder 2 und den Simulatorkammern 14,15 gewährleistet. Die in den zu den Radbremsen 7 bis 10 führenden Leitungsabschnitten eingefügten Trenn- bzw. Multiplexventile 32,33,37,38 bleiben offen.

Ein Druckabbau erfolgt durch Zurückfahren der Kolben 34,35,36, unter Umständen durch aktive Drehrichtungsumkehr der Gleichstrommotoren 44,45,46. Durch die letztgenannten Maßnahme wird eine Erhöhung der Dynamik des Bremsvorganges erreicht. Eine Druckhaltephase wird realisiert, indem die Trenn- bzw. Multiplexventile 32,33,37,38 in ihre Sperrstellung umgeschaltet werden.

Eine ABS-Regelung wird demnach dreikanalig (Vorderachse -zweikanalig, Hinterachse-einkanalig) im Regelmodus mit den Raddrehzahlsensoren 77,78,79,80 durchgeführt, wobei die Bremsdruckmodulation an der Hinterachse beispielsweise nach dem "select-low"-Prinzip erfolgt.

Bei einer Antriebsschlupfregelung oder bei einer Fahrstabilitätsregelung werden die Trennventile im Multiplex-Modus angesteuert. Dadurch kann auf einen vierten Bremsdruckgeber verzichtet werden.

Bei einem Ausfall der Elektronik/Fahrzeugelektrik gehen alle Ventile in den stromlosen Zustand. Dabei werden beide der Vorderachse zugeordneten Radbremsen 7,8 über die stromlos offenen Ventile 16,17 mit den Tandemhauptzylinder 2 verbunden, so daß die gesetzlich geforderten Bestimmungen bei Ausfall der Elektronik erfüllt werden.

Bei einem hydraulischen Ausfall der der Vorderachse zugeordneten Bremskreise kann immer mit den der Hinterachse zugeordneten Kreis die gesetzlich geforderte Bremswirkung "brake-by-wire" erreicht werden. Bei Ausfall des der Hinterachse zugeordneten hydraulischen Kreises ist durch die Verwendung des Bremslichtschalters 75 bzw. der Drucksensoren 22,23 sichergestellt, daß über die angetriebene Vorderachse die Bremswirkung "brake-by-wire" erreicht wird.

## Patentansprüche

1. Elektronisch regelbares, blockiergeschütztes Bremsbetätigungssystem in einem Kraftfahrzeug, mit einem mittels eines Betätigungspedals (1) betätigbaren Tandemhauptzylinder (102), mit durch eine elektronische Steuereinheit (3) ansteuerbaren Bremsdruckgebern (4,5,6), an die Radbremsen (7,8,9,10) des Fahrzeuges angeschlossen sind und die über durch die elektronische Steuereinheit (3) ansteuerbare Elektromagnetventile (16,17) absperrbare hydraulische Verbindungen (11,12) mit dem Tandemhauptzylinder (102) verbindbar sind, mit mindestens einer Sensoreinrichtung (13) zur Erkennung des Fahrerverzögerungswunsches sowie mit einer mit dem Tandemhauptzylinder (102) zusammenwirkenden Simulatorkammer (87), die von einem mittels einer Pedalwegsimulatorfeder (64) vorgespannten Simulatorkolben (63) begrenzt ist und deren Druck-Volumenaufnahme-Charakteristik unabhängig von der der Radbremsen (7,8,9,10) ist, dadurch **gekennzeichnet**, daß die Simulatorkammer (87) im Tandemhauptzylinder (102) als Bestandteil des Sekundärraums (59) ausgebildet ist, wobei der Simulatorkolben (63) im Sekundärkolben (61) geführt ist und eine hydraulische Kammer (65) im Sekundärkolben (61) begrenzt, die mit einem mit dem Tandemhauptzylinder (102) zusammenwirkenden drucklosen Druckmittelvorratsbehälter (57) in Verbindung steht.

2. Elektronisch regelbares Bremsbetätigungssystem nach Anspruch 1, dadurch **gekennzeichnet**, daß der Simulatorkolben (63) bei Betätigung des Tandemhauptzylinders (102) entgegen der Betätigungsrichtung bewegbar ist und mit einem an bzw. in dem Sekundärkolben (61) ausgebildeten Anschlag (62) zusammenwirkt.

3. Elektronisch regelbares Bremsbetätigungssystem nach Anspruch 2, dadurch **gekennzeichnet**, daß die Pedalwegsimulatorfeder (64) sich am Hauptbremszylindergehäuse (88) abstützt.

4. Elektronisch regelbares Bremsbetätigungssystem nach Anspruch 2 oder 3, dadurch **gekennzeichnet**, daß die Pedalwegsimulatorfeder (64) eine progressive Kraft-Weg-Kennlinie aufweist.

5. Elektronisch regelbares Bremsbetätigungssystem nach einem der Ansprüche 1 bis 4 dadurch **gekennzeichnet**, daß die Ventileinrichtungen (16,17) mittelbar durch die der elektronischen Steuereinheit (3) zugeführten Ausgangssignale der Sensoreinrichtung (13) ansteuerbar sind.

6. Elektronisch regelbares Bremsbetätigungssystem nach einem der Ansprüche 1 bis 5, dadurch **gekennzeichnet**, daß die Sensoreinrichtung (13) durch einen die auf das Bremspedal (1) einwirkende Betätigungskraft erfassenden Kraftsensor gebildet ist.

7. Elektronisch regelbares Bremsbetätigungssystem nach einem der Ansprüche 1 bis 6, wobei die Sensoreinrichtung durch mindestens einen an den Hauptbremszylinder angeschlossenen Drucksensor gebildet ist, dadurch **gekennzeichnet**, daß der Drucksensor (22,23) als Bestandteil der elektronischen Steuereinheit (3) ausgebildet ist.

8. Elektronisch regelbares Bremsbetätigungssystem nach einem der vorhergehenden Ansprüche, wobei die Bremsdruckgeber (4,5,6) durch Hydraulikzylinder (24,25,26) gebildet sind, deren Kolben (34,35,36) mittels elektrisch ansteuerbarer Gleichstrommotoren (44,45,46) betätigbar sind, dadurch **gekennzeichnet**, daß die Betätigung mittels eines zwischen Kolben (34,35,36) und Gleichstrommotor (44,45,46) geschalteten Kugelgewindetriebs (27) erfolgt.

9. Elektronisch regelbares Bremsbetätigungssystem nach Anspruch 8, dadurch **gekennzeichnet**, daß die Spindel (30) des Kugelgewindetriebs (27) und die Welle (31) des Gleichstrommotors (44,45,46) ein Bauteil bilden.

10. Elektronisch regelbares Bremsbetätigungssystem nach Anspruch 9, dadurch **gekennzeichnet**, daß die Welle (31) des Gleichstrommotors (44,45,46) hohl ausgebildet ist und die Spindel (30) des Kugelgewindetriebs (27) aufnimmt.

11. Elektronisch regelbares Bremsbetätigungssystem nach einem der Ansprüche 8 bis 10, dadurch **gekennzeichnet**, daß Mittel (32,33,39) vorgesehen sind, die eine Reduzierung des dem Gleichstrommotor (44,45,46) zuzuführenden Stromes bei gleichzeitigem Verhindern eines Abbaus des in der Radbremse (7,8,9,10) eingesteuerten Druckes ermöglichen.

12. Elektronisch regelbares Bremsbetätigungssystem nach Anspruch 11, dadurch **gekennzeichnet**, daß die Mittel durch zwischen der Radbremse (7,8,9,10) und dem Bremsdruckgeber (4,5,6) geschaltete Ventile (32,33) gebildet sind.

13. Elektronisch regelbares Bremsbetätigungssystem nach Anspruch 11, dadurch **gekennzeichnet**, daß die Mittel durch eine Reibungsbremse (39) gebildet sind, die mit dem Kugelgewindetrieb (37) des Bremsdruckgebers (4,5,6) zusammenwirkt.

14. Elektronisch regelbares Bremsbetätigungssystem nach Anspruch 13, dadurch **gekennzeichnet**, daß die Reibungsbremse (39) elektrisch ansteuerbar ist.

15. Elektronisch regelbares Bremsbetätigungssystem nach einem der Ansprüche 8 bis 14, dadurch **gekennzeichnet**, daß der Gleichstrommotor (44,45,46) reversierbar ausgebildet ist.

16. Elektronisch regelbares Bremsbetätigungssystem nach einem der Ansprüche 1 bis 7, wobei die Bremsdruckgeber durch Hydraulikzylinder gebildet sind, deren Kolben mittels ventilgesteuerter, pneumatisch bzw. hydraulisch ansteuerbarer Linearantriebe betätigbar sind, dadurch **gekennzeichnet**, daß die der Ansteuerung dienenden Ventile (40,41,42) als Druckregelventile ausgebildet sind.

17. Elektronisch regelbares Bremsbetätigungssystem nach Anspruch 16, dadurch **gekennzeichnet**, daß die hydraulische Ansteuerung der Linearantriebe (147,148,149) mittels einer einzigen Druckquelle (56) erfolgt, an die weitere Hydraulikverbraucher anschließbar sind.

18. Elektronisch regelbares Bremsbetätigungssystem nach dem Oberbegriff des Anspruchs 16, dadurch **gekennzeichnet**, daß die Linearantriebe (47,48,49) durch pneumatischen Hochdruck ansteuerbar sind.

19. Elektronisch regelbares Bremsbetätigungssystem nach wenigstens Anspruch 8 oder 16, dadurch **gekennzeichnet**, daß Mittel (50,51,52) zum Erfassen der Position der Druckgeberkolben (34,35,36) vorgesehen sind.

20. Elektronisch regelbares Bremsbetätigungssystem nach Anspruch 19, dadurch **gekennzeichnet**, daß die Mittel (50,51,52) zum Erfassen der Position der Druckgeberkolben durch die axiale Bewegung der Spindel (30) erfassende Wegsensoren gebildet sind.

21. Elektronisch regelbares Bremsbetätigungssystem nach einem der vorhergehenden Ansprüche 8 bis 15, dadurch **gekennzeichnet**, daß Mittel zum Erfassen der Winkelposition der Rotoren der Gleichstrommotoren (44,45,46) vorgesehen sind.

22. Elektronisch regelbares Bremsbetätigungssystem nach einem der Ansprüche 1 bis 7 in Verbindung mit den Ansprüchen 16,19,und 20 oder 21, dadurch **gekennzeichnet**, daß die der Ansteuerung dienenden Ventile (40,41,42) in einem Lageregelkreis integriert sind, der die Ausgangssignale der Mittel zum Erfassen der Position der Druckgeberkolben (50,51,52) verarbeitet.

23. Elektronisch regelbares Bremsbetätigungssystem nach einem der vorhergehenden Ansprüche, dadurch **gekennzeichnet**, daß Mittel (53,54,55) zum Sensieren des von den Druckgebern (4,5,6) aufgebrachten Druckes vorgesehen sind.

24. Elektronisch regelbares Bremsbetätigungssystem nach dem Oberbegriff des Anspruchs 16 in Verbindung mit Anspruch 23, dadurch **gekennzeichnet**, daß die der Ansteuerung dienenden Ventile (40,41,42) in einem Druckregelkreis integriert sind, der die Ausgangssignale der Mittel (53,54,55) zum Sensieren des von den Druckgebern (4,5,6) aufgebrachten Druckes verarbeitet.

## Claims

1. Electronically controllable anti-lock brake actuation system for a motor vehicle with a tandem master cylinder (102) actuatable by an actuating pedal (1), with brake pressure generators (4, 5, 6) adapted to be driven by an electronic control unit (3) and to which wheel brakes (7, 8, 9, 10) of the motor vehicle are connected and which can be connected with the tandem master cylinder (102) by means of hydraulic linkages (11, 12) that can be blocked by electromagnetic valves (16, 17) adapted to be actuated by the electronic control unit, with at least one sensor device (13) to recognize the driver's desired deceleration and with a simulator chamber (87) cooperating with the tandem master cylinder (102) and being bounded by a simulator piston (63) that is biassed by way of a pedal travel simulator spring (64), wherein the pressure-volume characteristic of the simulator chamber (87) is independent of that of the wheel brakes (7, 8, 9, 10),
characterized in that the simulator chamber (87) in the tandem master cylinder (102) is designed as a constituent of the secondary chamber (59), and the simulator piston (63) is guided in the secondary piston (61) and bounds a hydraulic chamber (65) in the secondary piston (61) which is in connection with a nonpressurized pressure fluid supply tank (57) cooperating with the tandem master cylinder (102).

2. Electronically actuatable brake actuation system as claimed in claim 1,
characterized in that the simulator piston (63) can move upon actuation of the tandem master cylinder (102) in opposition to the actuation direction and cooperates with a stop (62) formed on or in the master cylinder piston (61).

3. Electronically controllable brake actuation system as claimed in claim 2,
characterized in that the pedal travel simulator spring (64) is supported on the master brake cylinder housing (88).

4. Electronically controllable brake actuation system as claimed in claim 2 or 3,
characterized in that the pedal travel simulator spring (64) has a progressive force-travel characteristic curve.

5. Electronically controllable brake actuation system as claimed in any one of claims 1 to 4,
characterized in that the valve devices (16, 17) are actuatable indirectly by the output signals of the sensor device (13) sent to the electronic control unit (3).

6. Electronically controllable brake actuation system as claimed in any one of claims 1 to 5,
characterized in that the sensor device (13) is configured as a force sensor determining the actuation force which acts on the brake pedal (1).

7. Electronically controllable brake actuation system as claimed in any one of claims 1 to 6, wherein the sensor device is configured as at least one pressure sensor connected to the master brake cylinder,
characterized in that the pressure sensor (22, 23) is designed as a constituent of the electronic control unit (3).

8. Electronically controllable brake actuation system as claimed in any one of the preceding claims, wherein the brake pressure generators (4, 5, 6) are formed by hydraulic cylinders (24, 25, 26) having pistons (34, 35, 36) which can be actuated by means of electrically controllable d-c motors (44, 45, 46),
characterized in that the actuation is effected by means of a ball screw (27) connected between the piston (34, 35, 36) and the d-c motor (44, 45, 46).

9. Electronically controllable brake actuation system as claimed in claim 8,
characterized in that the spindle (30) of the ball screw (27) and the shaft (31) of the d-c motor (44, 45, 46) form one component.

10. Electronically controllable brake actuation system as claimed in claim 9,
characterized in that the shaft (31) of the d-c motor (44, 45, 46) is of hollow design and accommodates the spindle (30) of the ball screw (27).

11. Electronically controllable brake actuation system as claimed in any one of claims 8 to 10,
characterized in that means (32, 33, 39) are provided which make possible a reduction of the current supplied to the d-c motor (44, 45, 46) and simultaneously prevent a decrease of the pressure adjusted in the wheel brake (7, 8, 9, 10).

12. Electronically controllable brake actuation system as claimed in claim 11,
characterized in that the means are configured as valves (32, 33) connected between the wheel brake (7, 8, 9, 10) and the brake pressure generator (4, 5, 6).

13. Electronically controllable brake actuation system as claimed in claim 11,
characterized in that the means are configured as a friction brake (39) which cooperates with the ball screw (37) of the brake pressure generator (4, 5, 6).

14. Electronically controllable brake actuation system as claimed in claim 13,
characterized in that the friction brake (39) can be actuated electrically.

15. Electronically controllable brake actuation system as claimed in any one of claims 8 to 14,
characterized in that the d-c motor (44, 45, 46) is of reversible design.

16. Electronically controllable brake actuation system as claimed in any one of claims 1 to 7, wherein the brake pressure generators are formed by hydraulic cylinders having pistons which can be actuated by means of valve-controlled, pneumatically or hydraulically drivable linear drives, characterized in that the valves (40, 41, 42) which are used for the actuation are configured as pressure control valves.

17. Electronically controllable brake actuation system as claimed in claim 16,
characterized in that the hydraulic control of the linear drives (147, 148, 149) is effected by a single pressure source (56) to which additional hydraulic consumers can be connected.

18. Electronically controllable brake actuation system according to the preamble of claim 16,
characterized in that the linear drives (47, 48, 49) can be controlled by pneumatic high pressure.

19. Electronically controllable brake actuation system as claimed in at least claim 8 or 16,
characterized in that means (50, 51, 52) are provided to ascertain the position of the pressure generator pistons (34, 35, 36).

20. Electronically controllable brake actuation system as claimed in claim 19,
characterized in that the means (50, 51, 52) for sensing the position of the pressure generator pistons are travel sensors which determine the axial motion of the spindle (30).

21. Electronically controllable brake actuation system as claimed in any one of the preceding claims 8 to 15,
characterized in that means are provided to ascertain the angular position of the rotors of the d-c motors (44, 45, 46).

22. Electronically controllable brake actuation system as claimed in any one of claims 1 to 7 in conjunction with claims 16, 19, and 20 or 21,
characterized in that the valves (40, 41, 42) used for control are integrated in a position control circuit which processes the output signals of the means for sensing the position of the pressure generator pistons (50, 51, 52).

23. Electronically controllable brake actuation system as claimed in any one of the preceding claims,
characterized in that means (53, 54, 55) are provided for sensing the pressure generated by the pressure generators (4, 5, 6).

24. Electronically controllable brake actuation system according to the preamble of claim 16 in conjunction with claim 23, characterized in that the valves (40, 41, 42) used for the control are integrated in a pressure control circuit which processes the output signals from the means (53, 54, 55) for sensing the pressure generated by the pressure generators (4, 5, 6).

## Revendications

1. Système d'actionnement de freins à régulation électronique antiblocage des roues dans un véhicule automobile, comprenant un maître-cylindre tandem (102) pouvant être actionné par l'intermédiaire d'une pédale d'actionnement (1), comprenant des émetteurs de pression de freinage (4, 5, 6) pouvant être commandés via une unité de commande électronique (3), auxquels sont branchés des freins de roues (7, 8, 9, 10) du véhicule, et qui peuvent être reliés au maître-cylindre tandem (102) par l'intermédiaire de liaisons hydrauliques (11, 12) pouvant être coupées au moyen de valves électromagnétiques (16, 17) pouvant être pilotées par l'unité de commande électronique (3), comprenant au moins un dispositif capteur (13) destiné à détecter une demande de ralentissement du conducteur, ainsi qu'une chambre de simulateur (87) coopérant avec le maître-cylindre tandem (102), délimitée par un piston de simulateur (63) mis sous précontrainte par un ressort de simulateur de course de la pédale (64), et dont la courbe caractéristique pression-augmentation de volume est indépendante de celle des freins de roues (7, 8, 9, 10), caractérisé en ce que la chambre de simulateur (87) est aménagée dans le maître-cylindre tandem (102) en faisant partie intégrante de la chambre secondaire (59), le piston de simulateur (63) étant guidé dans le piston secondaire (61) et délimitant dans le piston secondaire (61) une chambre hydraulique (65) qui est en communication avec un réservoir (57) de fluide de pression non mis sous pression, coopérant avec le maître-cylindre tandem (102).

2. Système d'actionnement de freins à régulation électronique selon la revendication 1, caractérisé en ce que le piston de simulateur (63) est déplacé en sens inverse de la direction d'actionnement, lors de l'actionnement du maître-cylindre tandem (102), et coopère avec une butée (62) aménagée sur ou dans le piston secondaire (61).

3. Système d'actionnement de frein à régulation électronique selon la revendication 2, caractérisé en ce que le ressort (64) du simulateur de course de la pédale s'appuie sur le corps (88) du maître-cylindre de frein.

4. Système d'actionnement de frein à régulation électronique selon la revendication 2 ou 3, caractérisé en ce que le ressort (64) du simulateur de course de la pédale présente une courbe caractéristique force-déplacement progressive.

5. Système d'actionnement de frein à régulation électronique selon l'une des revendications 1 à 4, caractérisé en ce que les dispositifs de valves (16, 17) peuvent être pilotés indirectement par l'intermédiaire des signaux de sortie du dispositif capteur (13), qui sont envoyés à l'unité de commande électronique (3).

6. Système d'actionnement de frein à régulation électronique selon l'une des revendications 1 à 5, caractérisé en ce que le dispositif capteur (13) est constitué par un capteur de force mesurant la force d'actionnement appliquée à la pédale de frein (1).

7. Système d'actionnement de frein à régulation électronique selon l'une des revendications 1 à 6, où le dispositif capteur est constitué par au moins un capteur de pression branché sur le maître-cylindre de frein, caractérisé en ce que le capteur de pression fait partie intégrante de l'unité de commande électronique (3).

8. Système d'actionnement de frein à régulation électronique selon l'une des revendications précédentes, où les émetteurs de pression de freinage (4, 5, 6) sont constitués par des vérins hydrauliques (24, 25, 26) dont les pistons (34, 35, 36) peuvent être actionnés au moyen de moteurs électriques à courant continu (44, 45, 46) à commande électrique,
caractérisé en ce que l'actionnement s'effectue au moyen d'un entraînement à vis à billes (27) disposé entre le piston (34, 35, 36) et le moteur électrique à courant continu (44, 45, 46).

9. Système d'actionnement de frein à régulation électronique selon la revendication 8, caractérisé en ce que la vis (30) de l'entraînement à vis à billes (27) et l'arbre (31) du moteur électrique à courant continu (44, 45, 46) constituent une seule pièce.

10. Système d'actionnement de frein à régulation électronique selon la revendication 9, caractérisé en ce que l'arbre (31) du moteur électrique à courant continu (44, 45, 46) est creux et reçoit la vis (30) de l'entraînement à vis à billes (27).

11. Système d'actionnement de frein à régulation électronique selon l'une des revendications 8 à 10, caractérisé en ce que des moyens (32, 33, 39) sont prévus, qui permettent une réduction du courant à fournir au moteur électrique à courant continu (44, 45, 46) tout en évitant une réduction de la pression introduite dans le frein de roue (7, 8, 9, 10).

12. Système d'actionnement de frein à régulation électronique selon la revendication 11, caractérisé en ce que lesdits moyens sont constitués par des valves (32, 33) insérées entre le frein de roue (7, 8, 9, 10) et l'émetteur de pression de freinage (4, 5, 6).

13. Système d'actionnement de frein à régulation électronique selon la revendication 11, caractérisé en ce que lesdits moyens sont constitués par un frein à friction (39) qui coopère avec l'entraînement à vis à billes (37) de l'émetteur de pression de freinage (4, 5, 6).

14. Système d'actionnement de frein à régulation électronique selon la revendication 13, caractérisé en ce que le frein à friction (39) peut être commandé électriquement.

15. Système d'actionnement de frein à régulation électronique selon l'une des revendications 8 à 14, caractérisé en ce que le moteur électrique à courant continu (44, 45, 46) est réversible.

16. Système d'actionnement de frein à régulation électronique selon l'une des revendications 1 à 7, où les émetteurs de pression de freinage sont constitués par des vérins hydrauliques dont les pistons peuvent être actionnés au moyens d'entraînements linéaires à commande pneumatique ou hydraulique, commandés par valves,
caractérisé en ce que les valves (40, 41, 42) assurant la commande sont réalisées sous forme de valves de régulation de pression.

17. Système d'actionnement de frein à régulation électronique selon la revendication 16, caractérisé en ce que la commande hydraulique des entraînements linéaires (147, 148, 149) s'effectue à partir d'une seule source de pression (56), sur laquelle peuvent être branchés d'autres consommateurs hydrauliques.

18. Système d'actionnement de frein à régulation électronique selon le préambule de la revendication 16, caractérisé en ce que les entraînements linéaires (47, 48, 49) peuvent être commandés via une haute pression pneumatique.

19. Système d'actionnement de frein à régulation électronique selon au moins la revendication 8 ou 16, caractérisé en ce que des moyens (50, 51, 52) sont prévus pour relever la position des pistons (34, 35, 36) des émetteurs de pression.

20. Système d'actionnement de frein à régulation électronique selon la revendication 19, caractérisé en ce que les moyens (50, 51, 52) destinés à relever la position des pistons des émetteurs de pression sont constitués par des détecteurs de déplacement mesurant le déplacement axial de la vis (30).

21. Système d'actionnement de frein à régulation électronique selon l'une des revendications précédentes 8 à 15, caractérisé en ce que des moyens sont prévus pour relever la position angulaire des rotors des moteurs électriques à courant continu (44, 45, 46).

22. Système d'actionnement de frein à régulation électronique selon l'une des revendications 1 à 7, en combinaison avec les revendications 16, 19, 20 ou 21, caractérisé en ce que les valves (40, 41, 42) assurant la commande sont intégrées dans un circuit de régulation de la position, qui traite les signaux de sortie des moyens destinés à relever la position des pistons (50, 51, 52) des émetteurs de pression.

23. Système d'actionnement de frein à régulation électronique selon l'une des revendications précédentes, caractérisé en ce que des moyens (53, 54, 55) sont prévus pour mesurer la pression fournie par les émetteurs de pression (4, 5, 6).

24. Système d'actionnement de frein à régulation électronique selon le préambule de la revendication 16, en combinaison avec la revendication 23, caractérisé en ce que les valves (40, 41, 42) assurant la commande sont intégrées dans un circuit de régulation de pression, qui traite les signaux de sortie des moyens (53, 54, 55) destinés à mesurer la pression fournie par les émetteurs de pression (4, 5, 6).
